**Europäisches Patentamt**

**European Patent Office**

**Office européen des brevets**

(19)

(11) Veröffentlichungsnummer : **0 450 680 B1**

(12)                    **EUROPÄISCHE PATENTSCHRIFT**

(45) Veröffentlichungstag der Patentschrift :
**20.04.94 Patentblatt 94/16**

(51) Int. Cl.⁵ : **B01J 23/22,** B01J 27/053,
**C01B 17/79**

(21) Anmeldenummer : **91200501.4**

(22) Anmeldetag : **08.03.91**

(54) **Verfahren zur Herstellung von Katalysatoren und Tränklösungen.**

(30) Priorität : **23.03.90 DE 4009327**

(43) Veröffentlichungstag der Anmeldung :
**09.10.91 Patentblatt 91/41**

(45) Bekanntmachung des Hinweises auf die
Patenterteilung :
**20.04.94 Patentblatt 94/16**

(84) Benannte Vertragsstaaten :
**AT BE CH DE DK ES FR GB GR IT LI LU NL SE**

(56) Entgegenhaltungen :
EP-A- 0 014 052
EP-A- 0 151 823
US-A- 4 126 578
US-A- 4 184 980

(73) Patentinhaber : **METALLGESELLSCHAFT
Aktiengesellschaft
Postfach 10 15 01, Reuterweg 14
D-60015 Frankfurt (DE)**

(72) Erfinder : **Fennemann, Wolfgang
Schlinkenweg 6
W-6367 Karben (DE)**

Jouve, 18, rue Saint-Denis, 75001 PARIS

## Beschreibung

Die Erfindung betrifft ein Verfahren zur Herstellung eines Vanadiumoxid- und Alkaliverbindungen enthaltenden Katalysators zur Oxidation von $SO_2$ zu $SO_3$ durch Tränken vorgefertigter Trägerkörper mit Tränklösungen, die Vanadium und Alkalien enthalten, thermische Behandlung der getränkten Trägerkörper bei erhöhter Temperatur und anschließende Aktivierung bei einer Temperatur von 750°C bis 1000°C unter oxidierenden Bedingungen.

Die katalytische Umsetzung von $SO_2$ mit Sauerstoff zu $SO_3$ in Kontaktanlagen erfolgt heute mit Hilfe von Katalysatoren, die $V_2O_5$ und Alkalisulfat als Aktivsubstanz enthalten. Diese Katalysatoren müssen einen hohen Umsatz von $SO_2$ zu $SO_3$ erzielen, die Umsatztemperatur soll niedrig liegen, sie sollen eine geringe Anfälligkeit gegen höhere Temperaturen und eine gute mechanische Festigkeit haben. Diese Eigenschaften hängen weitgehend von ihrer Herstellung ab.

Die Tränkung vorgefertigter Trägerkörper mit einer Lösung der Aktivstoffe hat mehrere Vorteile gegenüber einstufig hergestellten Katalysatoren, bei denen Trägersubstanzen und Aktivstoffe vermischt und anschließend zu Katalysatorkörpern geformt werden. Die vorgefertigten Trägerkörper, die im allgemeinen aus $SiO_2$ bestehen, können ohne Rücksicht auf die Aktivsubstanzen hergestellt werden. Dadurch ist es möglich, Trägerkörper mit gleichbleibender Zusammensetzung, hoher innerer Oberfläche und guter mechanischer Festigkeit herzustellen. Bei der Tränkung wird eine gleichmäßige Verteilung der Aktivsubstanzen auf die gesamten Trägerkörper erzielt, so daß Katalysatorkörper einheitlicher Zusammensetzung entstehen und die Gefahr von Fehlchargen vermieden wird. Die Katalysatoren erzielen hohe Umsatzaktivitäten.

Die Herstellung von Katalysatoren durch Tränkung von vorgefertigten Trägerkörpern ist beschrieben in der EP-PS 0 047 540. Die Tränkung erfolgt mit einer Tränklösung, die pro Liter 600 - 1100g $H_2SO_4$ und 140 - 830g $V_2O_5$ und Alkalisulfat enthält, bei einer Temperatur zwischen 60°C und der jeweiligen Siedetemperatur der Tränklösung. Die getränkten Trägerkörper werden unter Bewegung getrocknet, wobei die maximale Trocknungstemperatur 700°C beträgt. Die Katalysatoren erzielen hohe Umsatzaktivitäten, auch bei niedrigen Temperaturen, und sind auch bei hohen Temperaturen mechanisch stabil.

Aus der EP-PS 0 151 823 ist es bekannt, daß die Umsatzaktivität solcher zweistufig hergestellten Katalysatoren dadurch weiter erhöht werden kann, daß die getrockneten Katalysatoren bei einer Temperatur von 750 - 1000°C unter oxidierenden Bedingungen aktiviert werden. Bei der Trocknung und Aktivierung tritt jedoch eine Zersetzung der Sulfate ein, so daß Schwefelsäure-Nebel entweichen. Zur Vermeidung von Emissionen sind aufwendige Maßnahmen erforderlich.

Die DE-OS 3022 894 beschreibt ein zweistufiges Verfahren zur Herstellung von Fließbettkatalysatoren, wobei die Trägerkörper nicht mehr als 4% $Al_2O_3$ enthalten und mit einer schwach schwefelsauren Lösung von Vanadyloxysulfat, in der das Vanadium in IV-wertiger Form vorliegt, und Kaliumhydrogensulfat getränkt werden. Anschließend erfolgt eine Trocknung bei Temperaturen von 150 - 250°C. Die Härtung der Trägerkörper oder der getränkten Trägerkörper erfolgt bei Temperaturen von nicht über 600°C und vorzugsweise bei 200 - 400°C. Auch bei diesem Verfahren treten beim Trocknen und Härten der getränkten Trägerkörper, insbesondere wenn die oben beschriebene Aktivierung durchgeführt wird, Schwefelsäure-Nebel auf.

Der Erfindung liegt die Aufgabe zugrunde, bei der zweistufigen Herstellung von Katalysatoren mit sauren Tränklösungen die Entwicklung von Schwefelsäure-Nebel bei der Trocknung und Aktivierung der getränkten Trägerkörper ganz zu vermeiden oder möglichst gering zu halten und Tränklösungen mit hoher Konzentration an Aktivsubstanzen herzustellen.

Die Lösung dieser Aufgabe erfolgt erfindungsgemäß dadurch, daß zur Herstellung der Tränklösung feinkörniges $V_2O_5$ in saurem, wäßrigem Medium unter Zusatz eines Reduktionsmittels und Reduktion zu $VO^{2+}$ aufgelöst wird, wobei Säure und Reduktionsmittel etwa in stöchiometrischer Menge zur Auflösung und Reduktion des $V_2O_5$ eingesetzt werden, die Alkalien als Salze eingesetzt werden und in der Lösung eine $SO_4$-Menge eingestellt wird, die zur Überführung der gesamten Menge der Alkalien in neutrale Sulfate bei der Trocknung und Aktivierung ausreicht oder bis zu 100% überstöchiometrisch ist.

Als Säure können organische Säuren - wie Ameisensäure, Essigsäure, Oxalsäure, Weinsäure, Zitronensäure - oder Schwefelsäure verwendet werden, wobei die Schwefelsäure auch durch Reaktion von Schwefeldioxid oder sauren Sulfiten mit $V_2O_5$ in der wäßrigen Phase selbst gebildet werden kann. Auch eine Kombination von zwei oder mehreren Säuren ist möglich. Da Oxalsäure, Zitronensäure und Weinsäure reduzierend auf $V_2O_5$ wirken, ist bei ihrer Verwendung der Zusatz eines Reduktionsmittels nicht erforderlich. Bei Essigsäure und Ameisensäure müssen Reduktionsmittel wie z.B. $SO_2$, Alkalisulfite, Alkalibisulfite oder Hydrazinsulfat eingesetzt werden. Bei Schwefelsäure wird vorzugsweise $SO_2$ als Reduktionsmittel eingesetzt. Wenn die organischen Säuren gleichzeitig als Reduktionsmittel wirken, muß die eingesetzte Menge entsprechend erhöht werden. Ein Überschuß stört nicht, erhöht aber die Kosten, da organische Säuren relativ teuer sind.

In allen Fällen werden stöchiometrische Mengen benötigt an

a) Reduktionsmittel zur Reduktion von $V^{5+}$ zu $VO^{2+}$

b) Säure zur Bildung von Vanadylsalzen, wie z.B. $VOSO_4$ oder $VO(HCOO)_2$.

In der Praxis gelten Überschüsse von bis zu 10% noch als stöchiometrisch und sind erforderlich, um Dosierungsungenauigkeiten auszugleichen und um möglichst schnell eine vollständige Reaktion zu erreichen. Der Ausdruck "etwa stöchiometrisch" umfaßt diesen Überschuß. Die Alkalien können in Form von Salzen der vorstehend aufgeführten Säuren eingesetzt werden. Da sie sich beim späteren Einsatz als Schwefelsäure-Katalysatoren sowieso in Sulfate umwandeln und diese besonders preisgünstig sind, werden bevorzugt - mindestens teilweise - direkt Sulfate eingesetzt. Wenn als Reduktionsmittel Alkalisulfite/Bisulfite eingesetzt werden, liegen diese automatisch in der Lösung als Sulfate vor.In erster Linie werden Kalium-, Cäsium- und Natriumsalze eingesetzt. Der Zusatz der Salze erfolgt vorzugsweise nach dem Auflösen des $V_2O_5$. Bei der Trocknung und Aktivierung entstehen Schwefelsäure-Nebel, wenn folgende Verbindungen in der Tränklösung und damit in den getränkten Trägerkörpern vorliegen: Vanadylsulfat ($VOSO_4$), freie Schwefelsäure und saure Alkalisulfate (z.B. $KHSO_4$), und wenn deren Gesamt-$SO_4$-Gehalt die zur Bildung von neutralen Alkalisulfaten erforderliche Menge übersteigt. Neutrale Alkalisulfate (z.B. $K_2SO_4$) zersetzen sich nicht und geben daher auch kein $SO_3$ ab. Wenn der Gesamt-$SO_4$-Gehalt der Tränklösung stöchiometrisch den $SO_4$-Gehalt aller Alkalien - bezogen auf Neutralsalze - nicht übersteigt, werden keine Schwefelsäure-Nebel emittiert. Die Vanadylsalze werden bei der Aktivierung unter Abspaltung des Säurerestes in $V_2O_5$ umgewandelt. Wenn die Säure und das Reduktionsmittel keinen Schwefel enthalten, werden die Alkalien vorteilhaft vollständig in Form von Sulfaten eingesetzt. Sulfate sind billiger als organische Salze, und organische Salze bilden bei der Trocknung und Aktivierung basisch wirkende Karbonate, welche mit zunehmender Menge den $SiO_2$-Träger chemisch angreifen. Wenn die Säure und das Reduktionsmittel $SO_4$ enthalten, werden entsprechend weniger Alkalisulfate eingesetzt und der Rest als organische Alkalisalze. Das Verhältnis von Alkalien zu Vanadium im Katalysator wird im allgemeinen auf 2 - 4 Mole Alkalien zu einem Mol Vanadium eingestellt.

Bei der Trocknung und Aktivierung der getränkten Katalysatorkörper können folgende Reaktionen ablaufen (für organische Säuren oder Alkalisalze werden als Beispiel nur Ameisensäure und deren Salze und als Alkalien das Kalium aufgeführt):

$$2\ VOSO_4 + 1/2\ O_2 \rightarrow V_2O_5 + 2\ SO_3 \uparrow$$
$$2\ VO(HCOO)_2 + O_2 \rightarrow V_2O_5 + 4\ CO_2 \uparrow + H_2O \uparrow$$
$$K_2SO_4 \rightarrow K_2SO_4$$
$$2\ KHSO_4 \rightarrow K_2SO_4 + H_2O \uparrow + SO_3 \uparrow$$
$$2\ VOSO_4 + 2\ K_2(HCOO)_2 + O_2 \rightarrow V_2O_5 + 2\ K_2SO_4 + 4\ CO_2 \uparrow + H_2O \uparrow$$
$$2\ VO(HCOO)_2 + 2\ K_2SO_4 + O_2 \rightarrow V_2O_5 + 2\ K_2SO_4 + 4\ CO_2 \uparrow + H_2O \uparrow$$
$$2\ VOSO_4 + 2\ K_2SO_4 + 1/2\ O_2 \rightarrow V_2O_5 + 2\ K_2SO_4 + 2\ SO_3 \uparrow$$

Es entstehen also bei Anwesenheit von $SO_4$ keine Schwefelsäure-Nebel, wenn das Mol-Verhältnis von Alkalimetall zu $SO_4$ gleich oder größer als 2 ist.

Eine vorzugsweise Ausgestaltung besteht darin, daß die Hälfte der zur Bildung von $VOSO_4$ erforderlichen $SO_4$-Menge in Form von Schwefelsäure in das wäßrige Medium eingesetzt und ein $SO_2$-haltiges Gas bis zur Auflösung des $V_2O_5$ in das wäßrige Medium eingeleitet wird. Der Lösevorgang läuft nach folgender Reaktionsgleichung ab:

$$V_2O_5 + H_2SO_4 + SO_2 \rightarrow 2VOSO_4 + H_2O.$$

Durch die eingesetzte Schwefelsäure erfolgt von Anfang an eine schnelle Auflösung des $V_2O_5$. Die zweite Hälfte der erforderlichen $SO_4$-Menge entsteht durch Reaktion von $V_2O_5$ mit $SO_2$. Als Gas wird vorzugsweise ein $SO_2$-haltiges Röstgas verwendet. Nach Auflösung des $V_2O_5$ wird die $SO_2$-Einleitung beendet, weil bei längerem Einleiten und gleichzeitiger Anwesenheit von Sauerstoff geringe Mengen an Schwefelsäure entstehen können. Als $SO_2$-haltiges Gas kann Röstgas verwendet werden. Wenn Röstgas zur Verfügung steht, ist dieses preisgünstig. Außerdem kann das aus der Begasung entweichende, schwache $SO_2$-Gas zurück in den Röstgasstrom gespeist werden. Dies gilt auch für mit $SO_2$ beladenes Stripper-Gas.

Eine vorzugsweise Ausgestaltung besteht darin, daß nach der Auflösung des $V_2O_5$ das wäßrige Medium zur Entfernung von überschüssigem $SO_2$ gestrippt wird. Da bei der Einleitung von $SO_2$ in das wäßrige Medium das $SO_2$ zunächst in Wasser gelöst wird, enthalten alle derartig hergestellten Lösungen aufgelöstes $SO_2$, das bei der Tränkung in den Katalysator gelangt und bei der Trocknung und Aktivierung als Schwefelsäure-Nebel ausgetrieben wird. Dies wird durch das Strippen verhindert. Das $SO_2$-Austreiben kann generell mit jedem Gas durchgeführt werden, welches keine Reaktion mit der Lösung eingeht, z.B. auch Rauchgas aus der Verbrennung fossiler Brennstoffe. Bei Verwendung von Luft kann etwas $SO_2$ zu $SO_3$ bzw. zu $H_2SO_4$ oxidiert werden, woraus geringfügig höhere $H_2SO_4$-Gehalte in der Lösung resultieren. Das $SO_2$-haltige Stripper-Gas kann entweder direkt mit $V_2O_5$-Suspension zur Reaktion gebracht werden oder durch Waschen mit alkalischen Lösungen (z.B. Hydroxide oder Karbonate) von $SO_2$ befreit werden. Das derart entschwefelte Stripper-Gas kann entweder erneut zum Strippen eingesetzt oder problemlos in die Atmosphäre abgeleitet werden. Die mit dem $SO_2$ beladene Waschlösung (z.B. $KHSO_3$-Lösung) kann bei der Herstellung von weiterer Tränklösung verwendet werden.

Eine vorzugsweise Ausgestaltung besteht darin, daß ein Teil der Alkalien in Form von organischen Salzen in einer Menge eingesetzt wird, die etwa stöchiometrisch zur Abbindung der bei der Auflösung des $V_2O_5$ eingebrachten Schwefel-Menge erforderlich ist, und der restliche Teil der Alkalien als neutrale Sulfate in die Lösung eingesetzt wird. Dadurch wird erreicht, daß keine flüchtigen $SO_4$-Verbindungen im Katalysator vorliegen und als Schwefelsäure-Nebel ausgetrieben werden.

Eine vorzugsweise Ausgestaltung besteht darin, daß die in das wäßrige Medium eingesetzte Menge an Wasser beträchtlich niedriger ist als die Summe der Wassermengen, die zur Auflösung der in der Tränklösung vorhandenen einzelnen Salze theoretisch erforderlich ist, wenn alle Kationen als Sulfate betrachtet werden. Die nach Literaturangaben theoretisch erforderliche Wassermenge zur Auflösung von Alkalisulfaten und $VOSO_4$ ergeben sich aus der nachfolgenden Tabelle.

**Tabelle 1:**

Lösungsgleichgewichte [in Gew.-% der Verbindung, Differenz zu 100 = Gew.-% $H_2O$]

| | 0°C | 20°C | 40°C | 60°C | 80°C | 100°C |
|---|---|---|---|---|---|---|
| $K_2SO_4$ [1] | 7,0 | 10,0 | 12,7 | 15,2 | 17,5 | 19,4 |
| $Cs_2SO_4$ [1] | 62,5 | 64,0 | 65,5 | 66,5 | 68,0 | 69,0 |
| $VOSO_4$ [2] | 36 | 39 | 43 | 48 | 52 | 55 |
| $Na_2SO_4$ | 4,4 [1] | 16,2 [1] | 32 [3] | 31 [3] | 30 [3] | |
| $Rb_2SO_4$ [1] | 26,6 | 32,5 | 36,6 | 40,5 | 42,9 | 45,0 |

[1] aus D'Ans-Lax, 1967, S. 1101 ff.

[2] aus Gmelin, 48 [B], S. 291, Fig. 40

[3] aus D'Ans-Lax, 1949, S. 918

EP 0 450 680 B1

Für die Betrachtung der Konzentration der Sulfate in der Tränklösung gemäß der Erfindung wird davon ausgegangen, daß die erforderliche Wassermenge der Summe der sich aus der obigen Tabelle ergebenden Einzelmengen entspricht, wobei nicht als Sulfate vorliegende Salze in Sulfate umgerechnet werden.

$$275,3g/l \ VO(COO)_2 \ \text{entsprechend} \ 289,5g/l \ VOSO_4$$
$$328,8g/l \ K_2SO_4$$
$$120,5g/l \ Cs_2SO_4$$
$$\overline{738,8g/l \ Salze}$$

hatte einen praktischen Wasserbedarf von 811,2g/l, was einer Salzkonzentration von 47,7 Gew.-% entsprach. Diese Lösung war bereits bei 20°C über lange Zeit haltbar.

Der nach der Literatur aus der Tabelle 1 erforderliche theoretische Wasserbedarf beträgt:

| | theor. $H_2O$-Bedarf in g/l gemäß Tab. 1 | | |
|---|---|---|---|
| | 20°C | 60°C | 100°C |
| 289,5 g/l $VOSO_4$ | 452,8 | 313,6 | 236,9 |
| 328,8 g/l $K_2SO_4$ | 2959,2 | 1834,4 | 1366,0 |
| 120,5 g/l $Cs_2SO_4$ | 67,8 | 60,7 | 54,1 |
| 738,8 g/l Salze | 3479,8 | 2208,7 | 1657,0 |
| theor. Salzkonz.          % | 17,5 | 25,1 | 30,8 |

Daraus ergibt sich, daß nach dem erfindungsgemäßen Verfahren überraschend wesentlich konzentriertere Lösungen hergestellt werden können als nach der Literatur zu erwarten war. Die Vereinfachung der Betrachtungsweise ist durchaus zulässig, da selbst für den theoretischen Fall, daß das VO(COO)$_2$ keinerlei Wasser zum Auflösen bedarf, der praktische Wasserbedarf nur ca. 25% des theoretischen Wasserbedarfes beträgt. Der Gehalt an Aktivsubstanzen im Katalysator ergibt sich aus der Konzentration der Tränklösung und aus der Aufnahmefähigkeit (Porosität) des Trägers. Da die Porosität des Trägers festliegt und begrenzt ist, und da Schwefelsäure-Katalysatoren hohe Aktivsubstanzgehalte aufweisen müssen, müssen die Tränklösungen möglichst hochkonzentriert sein, um die Aktivsubstanzen in einem Tränkvorgang aufbringen zu können.

Eine vorzugsweise Ausgestaltung besteht darin, daß die eingesetzte Wassermenge kleiner als 80% der theoretisch erforderlichen Wassermenge ist.

Eine vorzugsweise Ausgestaltung besteht darin, daß die eingesetzte Wassermenge kleiner als 40% der theoretisch erforderlichen Wassermenge ist.

Die Erfindung betrifft weiterhin ein Verfahren zur Herstellung einer Vanadiumsalze und Alkalisalze enthaltenden wäßrigen Tränklösung, dadurch gekennzeichnet, daß feinkörniges V$_2$O$_5$ in saurem, wäßrigem Medium unter Zusatz eines Reduktionsmittels und Reduktion zu VO$^{2+}$ aufgelöst wird, wobei Säure und Reduktionsmittel etwa in stöchiometrischer Menge zur Auflösung und Reduktion des V$_2$O$_5$ eingesetzt werden, die Alkalien als Salze eingesetzt werden, und in der Lösung eine SO$_4$-Menge eingestellt wird, die mindestens der stöchiometrischen Menge - bezogen auf Alkalien als neutrale Sulfate - entspricht oder diese bis zu 100% überschreitet, wobei die verwendete Wassermenge kleiner als 80% der Summe der Wassermengen ist, die zur Auflösung der in der Tränklösung vorhandenen einzelnen Salze theoretisch erforderlich ist, wenn alle Kationen als Sulfate betrachtet werden. Die Tränklösungen haben eine sehr hohe Konzentration an Aktivsubstanzen und können trotzdem über lange Zeit gelagert werden, ohne daß Ausfällungserscheinungen auftreten.

Eine vorzugsweise Ausgestaltung besteht darin, daß die eingesetzte Wassermenge kleiner als 40% der theoretisch erforderlichen Wassermenge ist.

Beispiel 1 (Vergleichsbeispiel)

Ausgehend von einem Katalysator mit einer Basiszusammensetzung von

$V_2O_5$           8,00 Gew.-%
$K_2SO_4$       19,16 Gew.-%
Trägerkörper    72,84 Gew.-%

sollte unter Verwendung eines Trägers mit 68% Saugfähigkeit (68 ml Tränklösung/100 g Trägerkörper) ein Katalysator hergestellt werden, dessen $K_2SO_4$-Gehalt zu 15 Mol-% durch $Cs_2SO_4$ ersetzt ist. Die Tränklösung muß demnach enthalten:

V-Verbindungen berechnet als $V_2O_5$ 161,5 g/l

K-Verbindungen berechnet als $K_2SO_4$ 328,8 g/l

Cs-Verbindungen berechnet als $Cs_2SO_4$ 120,5 g/l

Der erfindungsgemäß nicht zu $SO_x$-Emissionen führende S-Gehalt der Lösung entspricht dem an die Alkalien als neutrale Sulfate gebundenen $SO_4$ und beträgt - gerechnet als $H_2SO_4$ - 217,7 g/l. Darüberhinausgehende S-Verbindungen in der Tränklösung werden beim Trocknen und Aktivieren des Katalysators je nach angewandten Bedingungen ganz oder teilweise emittiert.

Die erforderliche Tränklösung wurde gemäß der EP-PS 047540 hergestellt und enthielt neben Wasser:

161,5 g/l $V_2O_5$

328,8 g/l $K_2SO_4$

120,5 g/l $Cs_2SO_4$

900 g/l $H_2SO_4$

Der Gesamt-S-Gehalt dieser Tränklösung - berechnet als $H_2SO_4$ - beträgt 1117,7 g/l. Das sind bis zu 900 g/l $H_2SO_4$ mehr als erfindungsgemäß zur Vermeidung von $SO_x$-Emissionen zulässig sind.

Mit dieser Lösung wurde der vorgefertigte Träger getränkt und bei 300°C getrocknet. Dabei entwichen bereits erhebliche Mengen $H_2SO_4$-Nebel. Anschließend wurde der getrocknete Katalysator einer Aktivierung gemäß EP-PS 0151823 unterzogen (Muffelofen, 775°C, 1 Stunde), wobei wiederum erhebliche Mengen $SO_x$ ($SO_2$, $SO_3$, $H_2SO_4$) entwichen.

Eine Analyse des fertigen Katalysators ergab ein Gewichtsverhältnis von S : V = 0,88. Hieraus errechnet sich - bezogen auf die eingesetzte Tränklösung - ein im Katalysator verbliebener $H_2SO_4$-Rest von 243,5 g/l. Das bedeutet eine $SO_x$-Emission von 874,2 g $H_2SO_4$/l Tränklösung (1117,7 g minus 243,5 g). Die im Katalysator verbliebene S-Menge entsprechend 243,5 g $H_2SO_4$/l Tränklösung war um ca. 12% höher als die erfindungsgemäße Mindestmenge von 217,7 g/l (stöchiometrisch erforderliche Menge zur Abbindung der Alkalien als neutrale Sulfate).

Beispiel 2

Es sollte der im Beispiel 1 beschriebene Katalysator hergestellt werden, wobei jedoch die Emission von umweltschädlichen $SO_x$-Gasen erfindungsgemäß zu minimieren war.

Als erfindungsgemäß erforderliche Säure und Reduktionsmittel (zur Auflösung des $V_2O_5$) wurden Schwefelsäure und Schwefeldioxid eingesetzt. Für die Herstellung von einem Liter Tränklösung ergab sich folgender theoretischer Chemikalienbedarf (neben Wasser):

328,8 g $K_2SO_4$

301,25 g $Cs_2SO_4$-Lösung (40%ig in Wasser)

161,5 g $V_2O_5$

89,78 g $H_2SO_4$ (97%ig, 1 Mol $H_2SO_4$/Mol $V_2O_5$)

56,88 g $SO_2$ (1 Mol/Mol $V_2O_5$)

Zur Abschätzung der Wärmeentwicklung und Simulierung einer größeren Charge (mit vernachlässigbarem Wärmeverlust) wurde in einem Dewargefäß gearbeitet. Dieses war über entsprechend gebohrten Gummistopfen gasdicht bestückt mit Thermometer, Flügelrührer mit KPG-Abdichtung, $SO_2$-Einleitrohr und Rückflußkühler, so daß die Wasserverluste und der Zutritt von Luft-$O_2$ in Grenzen gehalten wurden.

In die Vorlage aus 600 g dest. $H_2O$, 89,8 g 97%ige $H_2SO_4$ und 161,5 g $V_2O_5$-Pulver (Merck) wurde - beginnend bei 26°C - $SO_2$ in einer Menge von 30 Nl/h unter Rühren eingeleitet und die Reaktion über den Temperaturverlauf verfolgt. Das Temperaturmaximum wurde nach 75 Minuten mit 91°C erreicht. Nach insgesamt 4 h und einer mittlerweile auf 65°C abgefallenen Temperatur wurde der Lösevorgang beendet. Das $V_2O_5$ war vollständig aufgelöst. Die wirklich erforderliche Lösezeit beträgt demnach einen Wert zwischen 1,5 und 4 h. Anschließend wurden 301,3 g $Cs_2SO_4$-Lösung (40%ig) und 328,8 g $K_2SO_4$ zugegeben, wobei sich eine Mischungstemperatur von ca. 50°C einstellte. Nach 1 h Rühren konnte das Salz nicht voll aufgelöst werden. Es verblieb ein geschätzter, ungelöster Rest von 100 - 200 g (bei 45°C). Durch Erwärmen in 10°C-Schritten und

7

Halten von jeweils 1 h ergab sich bei 80°C fast vollständige Auflösung (ca. 10% ungelöst). Bei 90°C war dann alles gelöst.

Nach Abkühlen der Lösung auf RT blieb diese klar. Durch Zugabe von ca. 25 ml Wasser wurde exakt auf 1000 ml aufgefüllt. Bei 21°C betrug die Dichte 1548 g/l. Es wurde eine klare Lösung erhalten, obwohl dies nach dem Lösungsgleichgewicht von $K_2SO_4$ nicht zu erwarten war. Dieses beträgt bei 20°C nur 10,0 Gew.-% (Rest Wasser), während im Beispiel diese Zahl bei über 30% lag.

Die Lösung wurde analysiert und die Werte mit der Einwaage verglichen:

```
                                    Einwaage        Analyse
     ----------------------------------------------------------
     V   (als  V₂O₅    g/l           161,5            162
     K   (als  K₂SO₄)  g/l           328,8            330
     Cs  (als  Cs₂SO₄) g/l           120,5            120
     S   (als  H₂SO₄)  g/l           391,9*          443,6


     * incl. stöchiometrischer Menge aus der Reduktion von
        V₂O₅ mit SO₂
```

Die Gehalte an V, K, und Cs entsprachen demnach innerhalb der Analysentoleranzen den Einwaagewerten; der S-Gehalt lag um ca. 13% höher als berechnet. Hieraus ergibt sich, daß durch die überschüssige Anwendung von $SO_2$ ein Teil davon in Lösung verblieb. Aus dieser Lösung und dem vorgefertigten Träger wurde, wie im Beispiel 1 beschrieben, ein Katalysator hergestellt. Bei der Trocknung bei 300°C entwichen keine sichtbaren $H_2SO_4$-Nebel, bei der Aktivierung bei 775°C traten sehr wenig $H_2SO_4$-Nebel auf. Die $SO_x$-Emission war demnach visuell fast vollständig verschwunden.

Die Analyse des fertigen Katalysators ergab ein Gewichtsverhältnis von S : V = 0,86. Hieraus errechnet sich - bezogen auf die eingesetzte Tränklösung - ein im Katalysator verbliebener $SO_4$-Rest (berechnet als $H_2SO_4$) von 238,0 g/l. Das bedeutet eine $SO_x$-Emission - berechnet als $H_2SO_4$ - von 205,6 g/l (443,6 g minus 238,0 g). Durch das erfindungsgemäße Verfahren wurde die $SO_x$-Emission - berechnet als $H_2SO_4$ - von 874,2 g/l in Beispiel 1 auf 205,6 g/l vermindert, das ist eine Emissionsverminderung von 76,5%.

Beispiel 3

Es wurde wie in Beispiel 2 gearbeitet. Anstelle des Dewar-Gefäßes wurde jedoch ein in Laboratorien übliches Rührgefäß verwendet. Dieses war beheizbar und zur Vermeidung von Verdampfungsverlusten mit einem Rückflußkühler ausgerüstet. Die Begasung/Strippung erfolgte mit einem tief eingetauchten Frittenrohr. Nach Auflösen des $V_2O_5$ wurde die V-Lösung jedoch 1 Stunde lang unter Rühren mit $N_2$ begast, wobei gleichzeitig die Temperatur auf ca. 90°C angehoben wurde. Dabei wurde das gelöste $SO_2$ weitgehend ausgetrieben. Das $SO_2$-Austreiben gelingt umso besser, je höher die Temperatur ist. Der S-Gehalt in der fertigen Tränklösung (nach Zugabe von $K_2SO_4$ und $Cs_2SO_4$) betrug - berechnet als $H_2SO_4$ - 393,0 g/l. Im fertigen Katalysator wurde ein S:V-Gewichtsverhältnis von 0,87 analysiert und daraus ein im Katalysator verbliebener $H_2SO_4$-Rest - bezogen auf die eingesetzte Tränklösung - von 240,7 g/l errechnet. Das bedeutet eine $SO_x$-Emission - berechnet als $H_2SO_4$ - von 152,3 g/l (393,0 g minus 240,7 g). Durch das Austreiben von gelöstem $SO_2$ wurde die $SO_x$-Emission weiter vermindert.

Beispiel 4

In die im Beispiel 3 beschriebene Apparatur wurden 600 ml Wasser, 89,8 g 97%ige $H_2SO_4$ und 161,5 g $V_2O_5$ gegeben und ein Röstgas mit 12 Vol-% $SO_2$, 9 Vol-% $O_2$ und 79 Vol-% $N_2$ in einer Menge von 250 Nl/h eingeleitet. Nach ca. 3 h war das $V_2O_5$ voll aufgelöst. Anschließend wurde, wie im Beispiel 3 beschrieben, gelöstes $SO_2$ ausgetrieben. Danach wurde in Analogie zu Beispiel 2 $K_2SO_4$ und $Cs_2SO_4$ zugegeben und durch Wasserzugabe auf 1000 ml aufgefüllt (Dichte 20°C : 1550 g/l). Die Analyse der Lösung ergab einen S-Gehalt - berechnet als $H_2SO_4$ - von 392,0 g/l.

Die Lösung war bei Raumtemperatur über viele Tage stabil. Sie wurde wie in den Beispielen zuvor weiterverarbeitet, wobei ein Katalysator mit eineem S:V-Gewichtsverhältnis von 0,88 erhalten wurde. Hieraus errechnet sich eine im Katalysator verbliebene $H_2SO_4$-Menge von 243,5 g/l und eine $SO_x$-Emission - berechnet als $H_2SO_4$ - von 148,5/l (392,0 minus 243,5 g).

Beispiel 5

In die in Beispiel 3 beschriebene Apparatur wurden vorgelegt:

600 ml Wasser

161,5 g $V_2O_5$-Pulver

Nach Erwärmen auf 80°C wurde unter Rühren innerhalb von ca. 0,5 h eingetragen:

341,2 g Zitronensäure (2 Mol/Mol $V_2O_5$).

Dabei erfolgten Aufschäumen und $CO_2$-Entwicklung, und es bildete sich die bekannte tiefblaue Lösung, hervorgerufen durch das $VO^{2+}$-Ion. Die Zitronensäure wirkte in diesem Fall sowohl als Reduktionsmittel als auch als Säure (Lösungsmittel). Bei Verwendung von 2 Mol Zitronensäure/Mol $V_2O_5$ erfolgte praktisch vollständige $V_2O_5$-Auflösung bei 80°C. Ein Zitronensäureüberschuß ist nicht schädlich. Bei Verwendung von geringerer Zitronensäuremenge geht anteilig weniger $V_2O_5$ in Lösung. Bei 1,0 Mol Zitronensäure/Mol $V_2O_5$ werden nur 50% des $V_2O_5$ aufgelöst. Die erhöhte Temperatur ist sehr wichtig. Bei Raumtemperatur gelang selbst bei hohen Zitronensäureüberschüssen keine vollständige $V_2O_5$-Auflösung. Anschließend wurde zugegeben:

328,8 g $K_2SO_4$

301,3 g $Cs_2SO_4$-Lösung (40%ig).

Unter Rühren bei 80 - 90°C lösten sich diese komplett auf. Nach Abkühlen auf Raumtemperatur wurde mit Wasser auf 1000 ml aufgefüllt. Die Lösung konnte trotz ihrer hohen Salzkonzentration viele Tage bei Raumtemperatur aufbewahrt werden, ohne daß Kristallisation erfolgte.

Die Analyse der Lösung ergab einen S-Gehalt, welcher stöchiometrisch der Bildung von neutralen Alkalisulfaten entspricht. Die Lösung wurde wie in den vorhergehenden Beispielen zu einem Katalysator verarbeitet. Dabei trat beim Trocknen und Aktivieren weder visuell noch über Analyse des Katalysators nachweisbar $SO_x$-Emission auf.

Anstelle von Zitronensäure wurde auch Oxalsäure $(COOH)_2$ und Weinsäure (COOH x CH(OH) x CH(OH) x COOH) verwendet. Beide wirkten wie die Zitronensäure sowohl als Reduktionsmittel als auch als Lösungsmittel (Säure). Die Weinsäure reagierte wie die Zitronensäure bei niedriger Temperatur langsam und unvollständig. Bei der Oxalsäure war dies nicht so ausgeprägt, jedoch war auch hier eine höhere Temperatur günstiger. Für ein vollständiges $V_2O_5$-Auflösen sind je Mol $V_2O_5$ mindestens 1,5 Mol Weinsäure bzw. 3,0 Mol Oxalsäure erforderlich. Ein Überschuß war in beiden Fällen nicht schädlich. Um möglichst schnelle und vollständige $V_2O_5$-Auflösung zu erzielen und die Haltbarkeit der stark übersättigten Lösungen zu stabilisieren, empfiehlt sich der Einsatz eines kleinen Überschusses der jeweiligen Säure von bis zu 15%.

Beispiel 6

In die im Beispiel 3 beschriebene Apparatur wurden 200 ml Wasser, 161,5 g $V_2O_5$ und 143,6 g $H_2SO_4$ (97%ig) vorgelegt. Unter Rühren bei ca. 80°C wurde innerhalb von 1 h 57,8 g Hydraziniumsulfat ($N_2H_4$ x $H_2SO_4$) zugegeben. Dabei schäumte die Lösung unter Gasentwicklung auf. Nach einer Nachreaktionszeit von ca. 1 h war die immer schwächer werdende Gasentwicklung beendet und das $V_2O_5$ vollständig aufgelöst.

Parallel hierzu wurden zwei weitere klare Lösungen hergestellt, bestehend aus

Lösung 1:   199,3 g KOH
            166,8 g Ameisensäure (HCOOH, 98%ig)
            100 g Wasser

Lösung 2:   19,3 g $K_2SO_4$
            301,3 g $Cs_2SO_4$-Lösung (40%ig)

Beide Lösungen wurden auf 80°C erwärmt und nacheinander in die V-Lösung eingerührt. Dabei blieb die Gesamtlösung klar. Sie wurde in der üblichen Weise nach Abkühlen auf Raumtemperatur mit Wasser auf 1000 ml aufgefüllt. Die Lösung konnte trotz ihrer hohen Salzkonzentration bei Raumtemperatur aufbewahrt und verarbeitet werden.

Durch die Anwendung eines geringen $H_2SO_4$-Überschusses betrug der S-Gehalt der fertigen Lösung - berechnet als $H_2SO_4$ - 226,4 g/l. Bei der Hersetllung eines Katalysators entwichen weder beim Trocknen noch beim Aktivieren $SO_x$-Gase. Dies wurde durch die Analyse des fertigen Katalysators bestätigt. Aus dem analysierten S:V-Gewichtsverhältnis von 0,82 errechnet sich - bezogen auf die eingesetzte Tränklösung - ein im Katalysator verbliebener Rest (berechnet als $H_2SO_4$) von 226,9 g/l. Das bedeutet im Vergleich zu dem $H_2SO_4$-Gehalt der Lösung von 226,4 g/l, daß keine meßbare $H_2SO_4$-Menge freigesetzt wurde.

Anstelle der zur Herstellung der Lösung 1 verwendeten Ameisensäure kann auch die äquivalente Menge einer anderen organischen Säure verwendet werden, z.B.

223,9 g $(COOH)_2$ x $2H_2O$ (kristalline Oxalsäure) oder

248,8 g $H_3$ x $C_6H_5O_7$ x $H_2O$ (kristalline Zitronensäure).

Anstelle von Schwefelsäure kann z.B. auch die äquivalente Menge einer organischen Säure, welche nicht mit $V_2O_5$ reagiert, vorgelegt werden. Um die zur Bildung von neutralen Alkalisulfaten erforderliche Menge $SO_4$ in die Lösung zu bekommen, muß dann später entsprechend mehr Alkalisulfat zugesetzt werden.

**Patentansprüche**

1. Verfahren zur Herstellung eines Vanadiumoxid und Alkaliverbindungen enthaltenden Katalysators zur Oxidation von $SO_2$ zu $SO_3$ durch Tränken vorgefertigter Trägerkörper mit Tränklösungen, die Vanadium und Alkalien enthalten, thermische Behandlung der getränkten Trägerkörper bei erhöhter Temperatur und anschließende Aktivierung bei einer Temperatur von 750-1000°C unter oxidierenden Bedingungen, dadurch gekennzeichnet, daß zur Herstellung der Tränklösungen feinkörniges $V_2O_5$ in saurem, wäßrigem Medium unter Zusatz eines Reduktionsmittels und Reduktion zu $VO^{2+}$ aufgelöst wird, wobei Säure und Reduktionsmittel etwa in stöchiometrischer Menge zur Auflösung und Reduktion des $V_2O_5$ eingesetzt werden, die Alkalien als Salze eingesetzt werden, und in der Lösung eine $SO_4$-Menge eingestellt wird, die zur Überführung der gesamten Menge der Alkalien in neutrale Sulfate bei der Trocknung und Aktivierung ausreicht oder bis zu 100 % überstöchiometrisch ist.

2. Verfahren nach Anspruch 1, dadurch gekennzeichnet, daß als Reduktionsmittel $SO_2$ eingesetzt wird und die gemäß $V_2O_5 + H_2SO_4 + SO_2 \rightarrow 2VOSO_4 + H_2O$ erforderliche Menge an Schwefelsäure in das wäßrige Medium eingesetzt wird und das $SO_2$-haltige Gas bis zur Auflösung des $V_2O_5$ in das wäßrige Medium eingeleitet wird.

3. Verfahren nach Anspruch 1 oder 2, dadurch gekennzeichnet, daß beim Zusatz von $SO_2$ als Reduktionsmittel in das saure, wäßrige Medium nach der Auflösung des $V_2O_5$ das wäßrige Medium zur Entfernung von überschüssigem $SO_2$ gestrippt wird.

4. Verfahren nach einem der Ansprüche 1 bis 3, dadurch gekennzeichnet, daß ein Teil der Alkalien in Form von organischen Salzen in einer Menge eingesetzt wird, die etwa stöchiometrisch zur Abbindung der bei der Auflösung des $V_2O_5$ eingebrachten Schwefel-Menge erforderlich ist, und daß der restliche Teil der Alkalien als neutrale Sulfate in die Lösung eingesetzt wird.

5. Verfahren nach einem der Ansprüche 1 bis 4, dadurch gekennzeichnet, daß die in das wäßrige Medium eingesetzte Wassermenge kleiner als 80 % der Summe der Wasermengen ist, die zur Auflösung der in der Tränklösung vorhandenen einzelnen Salze theoretisch erforderlich ist, wenn alle Kationen als Sulfate eingesetzt werden.

6. Verfahren nach Anspruch 5, dadurch gekennzeichnet, daß die eingesetzte Wassermenge kleiner als 40 % der theoretisch erforderlichen Wassermenge ist.

7. Verfahren zur Herstellung einer Vanadiumsalze und Alkalisalze enthaltenden wäßrigen Tränklösung, dadurch gekennzeichnet, daß feinkörniges $V_2O_5$ in saurem, wäßrigem Medium unter Zusatz eines Reduktionsmittels und Reduktion zu $VO^{2+}$ aufgelöst wird, wobei Säure und Reduktionsmittel etwa in stöchiometrischer Menge zur Auflösung und Reduktion des $V_2O_5$ eingesetzt werden, die Alkalien als Salze eingesetzt werden, und in der Lösung eine $SO_4$-Menge eingestellt wird, die mindestens der stöchiometrischen Menge - bezogen auf die Alkalien als neutrale Sulfate - entspricht oder diese bis zu 100 % überschreitet, wobei die verwendete Wassermenge kleiner als 80 % der Summe der Wassermengen ist, die zur Auflösung der in der Tränklösung vorhandenen einzelnen Salze theoretisch erforderlich ist, wenn alle Kationen als Sulfate betrachtet werden.

8. Verfahren nach Anspruch 7, dadurch gekennzeichnet, daß die eingesetzte Wassermenge kleiner als 40 % der theoretisch erforderlichen Wassermenge ist.

## Claims

1. A method for producing a catalyst, containing vanadium oxide and alkali compounds, for the oxidation of $SO_2$ to $SO_3$ by the impregnation of prefabricated carrier bodies with impregnating solutions which contain vanadium and alkalis, heat treatment of the impregnated carrier bodies at elevated temperature, and subsequent activation under oxidising conditions at a temperature of 750-1000°C, characterised in that to produce the impregnating solutions fine-grained $V_2O_5$ is dissolved in acidic, aqueous medium with the addition of a reducing agent and reduction to $VO^{2+}$, with the acid and reducing agent being used in an approximately stoichiometric quantity for dissolving and reducing the $V_2O_5$, the alkalis being used as salts, and a quantity of $SO_4$ being set in the solution which is sufficient to convert the entire quantity of the alkalis into neutral sulphates during drying and activation, or being up to 100% hyperstoichiometric.

2. A method according to Claim 1, characterised in that $SO_2$ is used as the reducing agent and the quantity of sulphuric acid which is required in accordance with $V_2O_5 + H_2SO_4 + SO_2 \rightarrow 2VOSO_4 + H_2O$ is introduced into the aqueous medium and the $SO_2$-containing gas is introduced into the aqueous medium until the $V_2O_5$ is dissolved.

3. A method according to Claim 1 or 2, characterised in that upon the addition of $SO_2$ as a reducing agent into the acidic, aqueous medium after the dissolving of the $V_2O_5$, the aqueous medium is stripped to remove excess $SO_2$.

4. A method according to one of Claims 1 to 3, characterised in that a portion of the alkalis is used in the form of organic salts in a quantity which is approximately stoichiometrically required for binding the quantity of sulphur introduced during the dissolving of the $V_2O_5$, and that the remaining portion of the alkalis is introduced into the solution as neutral sulphates.

5. A method according to one of Claims 1 to 4, characterised in that the quantity of water introduced into the aqueous medium is less than 80% of the total of the quantities of water which is theoretically required for dissolving the individual salts present in the impregnating solution if all the cations are introduced as sulphates.

6. A method according to Claim 5, characterised in that the quantity of water used is less than 40% of the quantity of water which is theoretically required.

7. A method for producing an aqueous impregnating solution containing vanadium salts and alkali salts, characterised in that fine-grained $V_2O_5$ is dissolved in acidic, aqueous medium with the addition of a reducing agent and reduction to $VO^{2+}$, with the acid and reducing agent being used in an approximately stoichiometric quantity for dissolving and reducing the $V_2O_5$, the alkalis being used as salts, and a quantity of $SO_4$ being set in the solution which corresponds at least to the stoichiometric quantity - relative to the alkalis as neutral sulphates - or exceeds it by up to 100%, the quantity of water used being less than 80% of the total of the quantities of water which is theoretically required for dissolving the individual salts present in the impregnating solution if all the cations are regarded as sulphates.

8. A method according to Claim 7, characterised in that the quantity of water used is less than 40% of the quantity of water which is theoretically required.

## Revendications

1. Procédé pour la préparation d'un catalyseur contenant de l'oxyde de vanadium et des composés alcalins, pour l'oxydation de $SO_2$ en $SO_3$, par imprégnation de corps de support, préparés au préalable, avec des solutions d'imprégnation qui contiennent du vanadium et des alcalis, traitement thermique à haute température des corps de support imprégnés et activation subséquente à une température de 750 - 1 000°C, dans des conditions oxydantes, caractérisé en ce que, pour la préparation des solutions d'imprégnation, on dissout du $V_2O_5$ en fines particules dans un milieu aqueux acide, avec addition d'un réducteur et réduction en $VO^{2+}$, en utilisant l'acide et le réducteur approximativement en quantités stoechiométriques pour la dissolution et la réduction du $V_2O_5$, en utilisant les alcalis sous forme de sels et en ajustant dans la solution une quantité de $SO_4$ qui est suffisante pour la conversion de la quantité totale des alcalis en sulfates neutres, lors du séchage et de l'activation, ou qui excède de jusqu'à 100 % cette quantité stoechiométrique.

2. Procédé selon la revendication 1, caractérisé en ce qu'en tant que réducteur, on utilise $SO_2$, et on utilise dans le milieu aqueux la quantité d'acide sulfurique requise selon $V_2O_5 + H_2SO_4 + SO_2 \rightarrow 2VOSO_4 + H_2O$, et le gaz contenant $SO_2$ est introduit dans le milieu aqueux jusqu'à la dissolution du $V_2O_5$.

3. Procédé selon la revendication 1 ou 2, caractérisé en ce que, lors de l'addition de $SO_2$ en tant que réducteur dans le milieu aqueux acide après la dissolution du $V_2O_5$, le milieu aqueux est rectifié pour l'élimination du $SO_2$ en excès.

4. Procédé selon l'une des revendications 1 à 3, caractérisé en ce qu'une partie des alcalis est utilisée sous forme de sels organiques, en une quantité qui est requise approximativement stoechiométriquement pour la séparation de la quantité de soufre introduite lors de la dissolution du $V_2O_5$, et en ce que la partie résiduelle des alcalis est utilisée sous forme de sulfates neutres dans la solution.

5. Procédé selon l'une des revendications 1 à 4, caractérisé en ce que la quantité d'eau utilisée dans le milieu aqueux est inférieure à 80 % de la somme des quantités d'eau qui est théoriquement requise pour la dissolution des sels individuels présents dans la solution d'imprégnation, lorsque tous les cations sont utilisés sous forme de sulfates.

6. Procédé selon la revendication 5, caractérisé en ce que la quantité d'eau utilisée est inférieure à 40 % de la quantité d'eau théoriquement requise.

7. Procédé pour la préparation d'une solution aqueuse d'imprégnation contenant des sels de vanadium et des sels alcalins, caractérisé en ce que l'on dissout du $V_2O_5$ en fines particules dans un milieu aqueux acide, avec addition d'un réducteur et réduction en $VO^{2+}$, en utilisant l'acide et le réducteur approximativement en quantités stoechiométriques pour la dissolution et la réduction du $V_2O_5$, en utilisant les alcalis sous forme de sels et en ajustant dans la solution une quantité de $SO_4$ qui correspond au moins à la quantité stoechiométrique - par rapport aux alcalis sous forme de sulfates neutres - ou excède celle-ci de jusqu'à 100 %, la quantité d'eau utilisée étant inférieure à 80 % de la somme des quantités d'eau qui est théoriquement requise pour la dissolution des sels individuels présents dans la solution d'imprégnation, lorsque tous les cations sont considérés en tant que sulfates.

8. Procédé selon la revendication 7, caractérisé en ce que la quantité d'eau utilisée est inférieure à 40 % de la quantité d'eau théoriquement requise.